(19) **Europäisches Patentamt / European Patent Office / Office européen des brevets**

(11) **EP 3 786 810 B1**

(12) **EUROPEAN PATENT SPECIFICATION**

(45) Date of publication and mention
of the grant of the patent:
**13.08.2025  Bulletin 2025/33**

(21) Application number: **20192787.8**

(22) Date of filing: **26.08.2020**

(51) International Patent Classification (IPC):
***G06F 16/26*** *(2019.01)*

(52) Cooperative Patent Classification (CPC):
**G06F 16/26**

(54) **AUTOMATIC GENERATION OF COMPUTING ARTIFACTS FOR DATA ANALYSIS**

AUTOMATISCHE GENERIERUNG VON RECHENARTEFAKTEN FÜR DIE DATENANALYSE

GÉNÉRATION AUTOMATIQUE D'ARTÉFACTS INFORMATIQUES POUR L'ANALYSE DE
DONNÉES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.08.2019  US 201916552678**

(43) Date of publication of application:
**03.03.2021  Bulletin 2021/09**

(73) Proprietor: **SAP SE
69190 Walldorf (DE)**

(72) Inventors:
- **RIEMER, Dirk
  69190 Walldorf (DE)**
- **RAEV, Dimitrij
  69190 Walldorf (DE)**
- **GONCHAROV, Mikhail
  69190 Walldorf (DE)**

(74) Representative: **Müller-Boré & Partner
Patentanwälte PartG mbB
Friedenheimer Brücke 21
80639 München (DE)**

(56) References cited:
**US-B1- 9 734 229**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**EP 3 786 810 B1**

**Description**

**FIELD**

The present disclosure generally relates to analyzing relationships between data. Particular implementations relate to automatically implementing rules using a collection of relationships determined using machine learning techniques.

**BACKGROUND**

As computers become more pervasive, opportunities exist for determining relationships between data that may be generated or acquired. For example, relationships between data, which can be expressed as rules, can be used to determine whether particular types of data are associated with each other. These rules can be used for a variety of purposes, including optimizing various processes, or to obtain insights that might be exploited in other ways.

However, problems can arise in trying to apply rules, particularly collections of rules, to a data set. For example, individuals who may understand the practical implications of rules may find it difficult to develop a technical implementation of the rule. In addition, errors can arise if rules are not correctly implemented, including accounting for possible overlap between rules. Accordingly, room for improvement exists.

US 9 734 229 B1 describes a computer-implemented method for mining data in a data warehouse, which may include (1) identifying a parent table in a data warehouse, (2) identifying a child table in the data warehouse that depends from the parent table, (3) generating a rule family including rules based on the parent table and the child table, each of the rules in the rule family correlating a potential value of a field of the parent table with a potential value of a field of the child table, (4) determining a level of support for each rule in the rule family, and (5) evaluating quality of incoming data according to a rule in the rule family based on the determined level of support for the rule. Various other methods, systems, and computer-readable media are also disclosed.

**SUMMARY**

The present invention is defined by the features disclosed in the independent claims. Additional embodiments are defined in the dependent claims.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

Technologies are provided for automatically implementing composite data rules, where a composite data rule includes a plurality of data rules. From the plurality of data rules, rule antecedents and rule consequents are used to automatically generate one or more computing artifacts for evaluating data for compliance with a composite data rule. Computing artifacts can include a scope decision table, which includes rule antecedents of association rules in a composite data rule, and a condition decision table, which includes rule consequents of individual data rules in a composite data rule. Scope and condition expressions can be used with the scope decision table and the condition decision table, respectively, to generate a result indicating whether given data is in scope or whether the data item satisfied consequents in an individual data rule of the composite data rule if the composite data rule is in scope for the data.

In one aspect, a method is provided for automatically generating at least one collective data rule artifact that can be used in evaluating data for compliance with a collective data rule. A first plurality of individual data rules is received. An individual data rule includes one or more antecedents and one or more consequents.

A selection of a second plurality of individual data rules of the first plurality of individual data rules is received, where the second plurality of individual data rules are to be associated with a collective data rule. At least one collective data rule artifact is automatically generated at least in part from at least a portion of the antecedents, consequents, or a combination thereof, of individual data rules of the second plurality of individual data rules.

In another aspect, a method is provided for automatically generating a condition table (i.e., a condition decision table) that can be used in analyzing data items for compliance with a collective data rule. A collective data rule is received that includes a plurality of individual data rules. An individual data rule includes one or more antecedent fields and corresponding antecedent field values and one or more consequent fields and corresponding consequent field values. A condition table is automatically generated. The condition table includes a plurality of rows, where a row corresponds to an individual data rule of the plurality of individual data rules and includes the consequent field values of the respective individual data rule.

In a further aspect, a method is provided for automatically generating a plurality of computing artifacts that can be used in evaluating whether data items (such as data from one or more database tables, including data from a single row of a single database table) complies with a collective data rule. A plurality of data rules (e.g., individual data rules) are received.

A data rule includes one or more database fields and corresponding field values corresponding to rule antecedents and one or more database fields and corresponding field values corresponding to rule consequents. One or more data definition language statements are automatically executed to generate a first table. The first table has a plurality of rows. A given row corresponds to a data rule of the plurality of data rules and includes rule antecedent field values for the given data rule.

One or more data definition language statements are automatically executed to generate a second table. The second table has a plurality of rows. A given row corresponds to a data rule of the plurality of data rules and includes rule antecedent field values and rule consequent values for the given data rule. A first condition expression is automatically generated. The first condition expression is configured to return a first value if a data item corresponds to a row of the first table corresponding to a data rule and a second value otherwise. A second condition expression is automatically generated. The second condition expression is configured to return the first value if a data item corresponds to a row of the second table corresponding to a data rule and the second value otherwise.

The present disclosure also includes computing systems and tangible, non-transitory computer readable storage media configured to carry out, or including instructions for carrying out, an above-described method. As described herein, a variety of other features and advantages can be incorporated into the technologies as desired.

## BRIEF DESCRIPTION OF THE DRAWINGS

FIG. 1 is a schematic diagram illustrating a data processing flow for automatically generating computing artifacts for evaluating collective data rules.

FIG. 2 illustrates various computing artifacts that can be used in evaluating collective data rules.

FIG. 3 is an example user interface screen for selecting individual data rules to be used in a collective data rule.

FIGS. 4A and 4B illustrate an example user interface screen that can be used to configure, and provide information regarding, a collective data rule, including computing artifacts associated with a collective data rule.

FIG. 5 is an example user interface screen illustrating actions that can be taken if given data does or does not satisfy a collective data rule.

FIG. 6 is an example user interface screen illustrating a condition expression.

FIG. 7 is an example user interface screen illustrating a condition decision table.

FIGS. 8-10 are flowcharts illustrating operations in various embodiments of automatically generating computing objects useable in implementing collective data rules, according to the present disclosure.

FIG. 11 is a diagram of an example computing system in which some described embodiments can be implemented.

FIG. 12 is an example cloud computing environment that can be used in conjunction with the technologies described herein.

## DETAILED DESCRIPTION

### Example 1- Overview

As computers become more pervasive, opportunities exist for determining relationships between data that may be generated or acquired. For example, relationships between data, which can be expressed as rules, can be used to determine whether particular types of data are associated with each other. These rules can be used for a variety of purposes, including optimizing various processes, or to obtain insights that might be exploited in other ways.

For example, a user may analyze rules to determine that they provide an indication or test of data quality (e.g., the rules can be used to define validation checks), for predictive purposes, and to uncover relationships that may be used for a variety of purposes, including improving performance and efficiency. In a particular aspect, relationships between particular attributes, or attribute values, of one or more relational database tables can be used to optimize database operations, such as by partitioning data to optimize database operations, such as select and join operations (e.g., reducing a number of multi-node selects or joins, or determine optimized paths between relations) or simplifying database transaction management (e.g., by reducing a number of two-phase commit operations).

However, problems can arise in trying to apply rules, particularly collections of rules, to a data set. For example, individuals who may understand the practical implications of rules may find it difficult to develop a technical implementation of the rule. In addition, errors can arise if rules are not correctly implemented, including accounting for possible overlap between rules. Accordingly, room for improvement exists.

The present disclosure provides technologies that can be used to implement collective (or composite) data rules (for example, a data quality rule, such as for use in evaluating master data of an entity), where a collective data rule includes a plurality of individual data rules. An individual data rule (such as an association rule) can be generally of the form:

$$\text{Atecedent\_1 + Antecedent\_2 + ... Antecedent\_n} \rightarrow \text{Consequent\_1 + Consequent\_2 + ... Consequent\_n}$$

where a given individual data rule include one or more antecedents, or conditions that define when the rule applies, and one or more consequents, which are consequences that are expected to follow if the conditions are met.

A rule can be considered to be in scope if the antecedents for the rule are satisfied. A rule can be considered to be satisfied, or valid, if the rule is in scope and all expected consequents of the rule are satisfied. In some cases, rather than being used to determine whether particular data is valid (e.g., satisfies the rule), a rule can be used to set values.

For example, consider a rule: Field_A = X, Field_B =1 → Field_C = XYZ. If particular data being analyzed has Field A =X and Field B =1, then the rule is in scope. If a value has been assigned for Field C, the rule can be determined as satisfied if the value is "XYZ," and not satisfied otherwise. Or, if no value has been assigned to Field C, but the antecedents of the rule are satisfied, "XYZ" can be assigned to Field C. In some cases, if a rule is not satisfied for particular data, the data can be updated so that is has values corresponding to the consequents for the rule.

Typically, the individual data rules will have some relationship with each other. In some cases, two (or more) rules can be considered to be related if there is an overlap between rule consequents, rule antecedents, or both. Rules can be considered related for other reasons, such as an observed correlation between rules (e.g., statistically, it is observed that if Rule A is satisfied, that Rule B is satisfied, at least to a threshold amount, or that the rules are negatively correlated, such that if Rule A is satisfied, then Rule B is not satisfied, at least to a threshold amount), based on user input, or based on a data model. For example, if a data model represents a particular analog world object, it may be known that two attributes have a semantic relationship, even if those two attributes do not show up in the same rule.

Once individual data rules have been defined or obtained, such as using a machine learning technique, such as association rule mining, a plurality of semantically related rules can be selected for inclusion as a collective data rule. In some cases, individual data rules in a collective data rule can represent various possible value combinations for fields that are included as antecdents of one or more rules. For example, assume two fields are to be included as rule antecedents in individual data rules, and each field has five possible values.

In this case, there are twenty-five possible combinations for the values of A and B, and therefore a maximum of twenty-five possible rules. However, in practice, there could be a smaller number of rules, as, for example, some values of A (or B) maybe not be correlated with a value of B (or A), or, some combinations of A and B may not occur, such as not representing combinations that are found in the analog world.

Note that in some cases, rules can be combined, such as if the value of a possible antecedent does not really matter in terms of consequents that might be associated with a given data item. For instance, in the example above, it could be that a particular value of A determines whether the rule is in scope (and thus the one or more consequents associated with the rule) no matter the value of B. In this case, the rule could be solely expressed in terms of A. In any event, all or a portion of rules involving A, B, or a combination of A and B may be considered for a collective data rule.

One issue that can arise from rule discovery procedures is that manual implementation of trends identified can be overly general. For example, a user may specify a consequent portion of a rule to be implemented on a data set without checking to see whether individual members of the data set should have that rule in scope. If the rule should not be in scope for a particular data item, a value of that data item may be incorrectly modified, or identified as being erroneous even though it is not.

Particularly if a large number of individual data rules or collective data rules exist, or if a collective data rules includes a large number of data rules, issues can arise in implementing data rules. Rules may be implemented in a manner that incorrectly identifies errors, or results in values being changed incorrectly. For example, if a more general rule is set to take effect before a more specific rule, a value for the general rule might be assigned to a data item that also meets the more specific rule, and where the more specific rule assigns a different value. As described above, in any event, implementing collective data rules can generally be time consuming and error prone for other reasons, and rules simply may not be implemented at all if the users who find and understand the rules are not technically capable of implementing the rules.

Disclosed technologies can provide advantages by separately determining whether a rule is in scope and determining whether the rule is satisfied. A report can be provided that indicates, for a collective data rule, for what amount (e.g., percentage) of the data set the rule was in scope, for what amount the rule was satisfied, and for what amount the rule was not satisfied. Similar information can optionally be provided regarding individual data rules in a collective data rule. Understanding the relevance of data rules, individual or collective, to a data set can help a user in evaluating what rules should be applied to give data set. Among other things, removing or disabling irrelevant rules can save computing resources.

In particular examples, the disclosed technologies include generating one or more artifacts, such as data objects useable by a computer, useable in implementing a collective data rule. Generally, these artifacts can be classified as relating to the scope of a collective data rule or a condition (or validity, or assignment of value) of a data quality rule. Scope artifacts can include a scope table (or another data structure that can store information, and be evaluated, in a similar manner as a table) where rows represent individual data rules in the collective data rule and have values (including NULL or wildcard values, in at least some implementations) for rule antecedents. Each row can include a value that is assigned during data evaluation if the antecedents for that row are satisfied. The value can be a Boolean value that indicates whether that particular individual data rule is in scope for that data item. In at least some cases, the Boolean value can be assigned to an indicator for the collective data rule instead of, or in addition to, assigning the value for an individual data rule. That is, typically a collective data rule will be considered to be in scope if at least one individual data rule in the collective data rule is in scope.

The Boolean value associated with the scope table artifacts can be used in a scope expression. The scope expression can be used in determining whether the collective data rule is in scope for a data item. Assume that the scope table determines a value of a Boolean scope variable SCOPE. A Boolean expression can have the form of IF SCOPE == TRUE, THEN CollectiveDataRule.Scope = TRUE.

Similar artifacts, a table artifact and an expression artifact, can be generated for conditions (or consequents) associated with a collective data rule. The condition table can be structured in a similar manner as the scope table. However, the condition table includes one or more columns for values that are expected if the rule antecedents are satisfied (e.g., if the particular rule is in scope). Individual data rules, corresponding to rows of the condition table, can also be associated with a Boolean value, which can be used by the condition expression to provide an indication as to whether the collective data rule (or optionally an individual data rule in the collective data rule) is satisfied by the data element. In some cases, the Boolean variable can be set to FALSE, such that FALSE is the value returned unless it is changed to TRUE as a result of satisfying a row of the condition table.

**Example 2- Example Collective Data Rule Computing Artifact Generation Processing Flow**

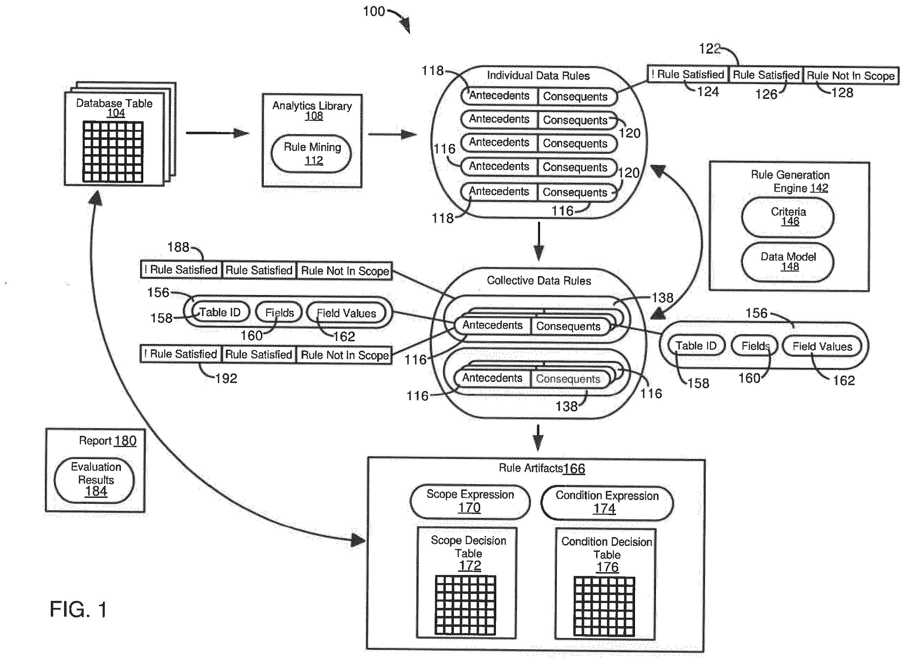

FIG. 1 schematically depicts a computing environment 100 illustrating how disclosed technologies can be used to automatically create computing artifacts for collective data rules. The computing environment 100 includes one or more database tables 104. The database tables 104 can be maintained in a relational database system, and typically include a plurality of rows (or records) and a plurality of columns (or attributes or fields). In many cases, based on analyzing records for one or more of the tables 104, associations can be determined between values for particular attributes in one or more tables.

These relationships are mined using a rule mining algorithm 112, which can be an algorithm, such as a machine learning algorithm, associated with an analytics library 108. Suitable algorithms include Apriori, ELCAT, and FP-growth. However, other algorithms can be used for identifying relationships between attributes and attribute values. Executing the rule mining algorithm on at least a portion of the tables 104 can provide one or more mined individual data rules 116. As explained in Example 1, individual data rules typically have one more antecedents 118 and one or more consequents 120.

Although FIG. 1 describes individual data rules 116 as being determined by the rule mining algorithm 112, in other cases all or a portion of the individual data rules 116 can come from another source. For example, all or a portion of the individual data rules 116 can be manually entered by a user, including being variants of rules initially identified by the rule mining algorithm 112. Or, individual data rules 116 can be imported from another repository or provided by another process.

In at least some cases, individual data rules 116 can be associated with result statistics 122. Result statistics 122 can provide information about the accuracy of an individual data rule 116, such as in the tables 104 used for rule mining, or in a test or sample set of tables to which the rules will be applied or another sample set. The result statistics 122 can include a value 124 indicating an amount (e.g., a percentage) of data that does not satisfy the rule, a value 126 indicating an amount (e.g., a percentage) of data that satisfies the rule, and a value 128 indicating an amount (e.g., a percentage) of data for which the rule is not in scope. In some cases, a user interface display can render the results statistics 122 in a stacked bar or column format, including, in some cases, color coding or otherwise visually distinguishing the values 124, 126, 128.

One or more, typically a plurality, of individual data rules 116 can be selected for inclusion in one or more collective data rules 138. The collective data rules 138 can include, or include references to, their constituent individual data rules 116. In some implementations, a user can manually select individual data rules 116 to be included in a collective data rule 138. In other cases, all or a portion of the individual data rules 116 for a collective data rule 138 can be automatically selected for inclusion in the collective data rule, at least initially. That is, a user may review, and optionally modify or delete, any putative collective data rules 138 that might have been automatically been selected or generated.

In cases where all of a portion of one or more collective data rules 138 are determined automatically, construction of the collective data rules can be carried out by a rule generation engine 142. The rule generation engine 142 can construct collective data rules 138 using one or both of rule criteria 146 and a data model 148. Rule criteria 146 can include templates or criteria for selecting individual data rules 116 to be included in a collective rule 138. Criteria can include, for example, criteria for determining when two individual rules 116 are sufficiently related to be included in a collective data rule 138, such as having a threshold number (e.g., one, or a plurality) of antecedents in common, having a threshold number (e.g., one, or a plurality) of consequents in common, being from the same table or related tables etc.

Relatedness of tables, or of attributes between or within tables, can be determined with respect to the data model 148. The data model 148 can be a representation of relationships between the tables 104, such as showing relationships based on foreign keys, alternate keys, or associations between tables, or using information such as database triggers or views to determine how tables and their attributes are related. The data model 148 can be, or can be based at least in part, a data dictionary or information schema associated with a database system.

In further implementations, the data model 148 can include information regarding computing objects (e.g., abstract data types) associated with the tables 104, such as data objects associated with the tables via object relational mapping. For example, if a given table 104 includes 20 attributes, and 5 are included in a particular data object (e.g., representing a product being produced via a production process), that information can be used in determining whether individual data rules 116 that do or do not include those 5 attributes should be considered for inclusion in the same collective data rule 138. Or, relationships between such data objects can be used to determine whether relationships should be inferred between the attributes used in such related data objects (e.g., a product table is known to be related to a material table, which may in turn be related to a supplier table).

The antecedents 118 and consequents 120 of the individual data rules 116 in a collective rule 138 are typically associated with information 156 regarding their source and which can be used to identify them. The information 156 can include a table identifier 158, identifying the table 104 associated with the antecedent 118 or consequent 120. The information 156 can also include an identifier 160 for a field associated with the antecedent 118 or consequent 120, and a value (or optionally, plural values) 162 associated with each field 160.

The information 156 for the individual data rules 116 in a collective data rule 138 can be used to construct various rule artifacts 166. The rule artifacts 166 can include a scope expression 170, a scope decision table 172, a condition expression 174, and a condition decision table 176. The scope decision table 172 and the condition decision table 176 are typically created for a particular collective data rule 138. Correspondingly, the scope expression 170 and the condition expression 174 are typically specified with respect to the corresponding scope decision table 172 and the condition decision table 176, respectively.

The scope expression 170 and the condition expression 174 are also evaluated with respect to their respective scope decision table 172 and condition decision table 176. That is, the scope expression 170 and the condition expression 174 can be constructed as conditional statements that evaluate to TRUE or FALSE depending on analysis results of the corresponding decision table 172 or 176.

The tables 172, 176 can be generated, in some examples, by populating the antecedents 118 or the consequents 120 of individual data rules 116 in a collective data rule 138 into a suitable programming language, such as SQL. For example, a program can be written having a command such as:

CREATE TABLE SCOPE (antecedent1, antecedent 2, ... antecedent n);

where the antecedents 118 from the actual individual data rules 116 are inserted into the command prior to execution. Or, if a table already has been created, a command can be provided to add addition columns, such as

$$\text{ALTER TABLE SCOPE ADD attribute\_n+1;}$$

Individual data rules 116 can then be represented in the relevant table by inserting the respective antecedent values 118 (in the case of the scope decision table 172), using a command such as:

INSERT INTO SCOPE (value_antecedent1, value_antecedent2, ... value_antecedent_n) Similar commands can be used to create the condition decision table 176, or other computing artifacts used in implementing collective data rules 138.

After the collective rules 138 are defined, and the corresponding rule artifacts 166 are created, one or more of the collective rules are used to evaluate a data set, such as all or a portion of the database tables 104. Evaluation results 184 can be provided in an evaluation report 180. The evaluation results 184 can include one or both of result statistics 188 for a given collective data rule 138 and result statistics 192 for given individual data rules 116 in the given collective data rule, where the result statistics 188, 192 can be at least generally similar to the result statistics 120.

**Example 3- Example Collective Data Rule Computing Artifacts**

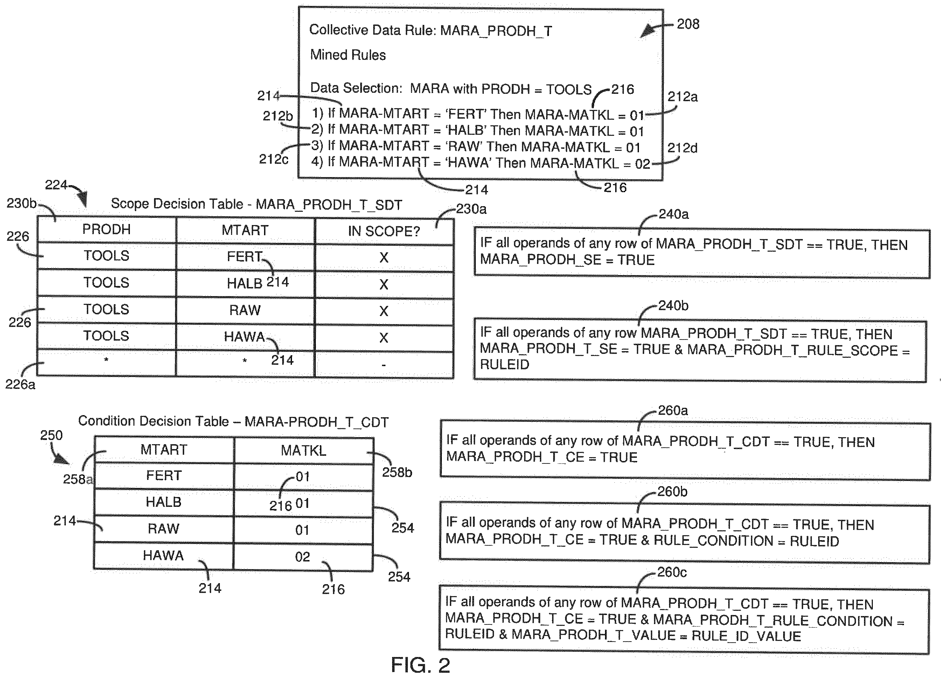

FIG. 2 provides an example of how rule artifacts for a collective data rule can be automatically generated from a selection of individual data rules. A collective data rule 208 is shown as including a plurality of individual data rules 212 (shown as rules 212a-212d), such as rules that were mined using an association rule mining algorithm based on a data selection of test data from the MARA table having a value of TOOLS for the PRODH attribute. Each individual data rule 212 includes an antecedent 214 and a consequent 216.

The antecedents 214 correspond to different values of the MTART attribute of the MARA table. A given individual data rule 212 is in scope if the value of MTART for a particular data item is equal to the antecedent 214 for that rule. In a given individual data rule 212, the antecedent 216 provides the value expected for a particular data item. As shown, the antecedents 216 correspond to different values of the MATKL attribute.

Note that, in the collective data rule 208, the collective data rule is in scope as long as the antecedent 214 of any individual data rule 212 is satisfied. Also, the individual data rules 212 can be considered to be non-overlapping, in that only a single individual data rule will be in scope at a time, and thus only a single consequent 216 will be active/possible if the collective data rule 208 is in scope. However, even though the antecedents 214 of the individual data rules 212 are unique, the consequents 216 of the individual data rules are not unique.

The antecedents 214 of the individual data rules 212 in the collective data rule 208 can be automatically extracted and used to populate a scope decision table 224. For example, the individual data rules 212 can be parsed, and each field that serves as an antecedent 214 in an individual data rule can be used in a data definition statement (e.g., in SQL) used to create or modify the scope decision table 224. Although in the illustrated example, the individual data rules 212 only include a single antecedent 214, the same procedure can be applied when the individual data rules have multiple antecedents, including when antecedents differ between different individual data rules.

The antecedents 214 corresponding to each individual data rule 212 can be inserted as rows 226 in the scope decision table 224, with the value of the antecedent inserted as the value for the column corresponding to the antecedent. In the event that not all individual data rules 212 have values for all antecedents 214 in the scope decision table 224, the corresponding cell(s) can be left empty, or a NULL value or similar value provided in the cell to indicate that a particular antecedent is not used for a particular individual data rule.

The scope decision table 224 can include a column 230a that is not correlated with a particular antecedent 214, but provides a value that can be used when the scope decision table is evaluated, such as a value that can be assigned to a variable that represents an outcome of the scope decision table, indicating whether the collective data rule 208 is in scope.

The scope decision table 224 can include a row 226a that corresponds to a default result that will apply if a particular data item does not match any other row in the scope decision table (e.g., the values of the data item do not match the antecedents 214 for any of the individual data rules 212 in the collective data rule 208). In some cases, the value in row 226a of the column 230a can be a value indicating that the collective data rule 208 is not in scope, including a value (including a lack of a value) that does not change a default value of a variable that is associated with a result indicating whether the collective data rule is in scope. For example, such a variable may initially have a value of FALSE, and if the row 226a applies, the value remains FALSE, and if another row 226 is satisfied, the value is changed to TRUE.

A scope expression, such as scope expression 240a or scope expression 240b, is configured to evaluate the scope decision table 224. Scope expression 240a is configured to evaluate rows 226 of the scope decision table 224, and the scope expression 240a will in turn provide an evaluation result based on the evaluation of the scope decision table. That is, typically a scope expression, such as scope expression 240a, will be configured to return a Boolean value, or assign a Boolean value to a variable, based on the evaluation of the scope decision table 224. Rows 226 of the scope decision table 224 are evaluated, such as being sequentially evaluated. However, if desired, multiple rows 226 can be concurrently evaluated.

Evaluation of a row can include evaluating values for columns of the scope decision table 224 corresponding to operands (i.e., values for antecedents 214 for particular individual data rules 212 corresponding to rows of the scope decision table). If the data item being evaluated matches all of the operand values for a given row 226, the value provided in the column 230a can be provided as an evaluation result for evaluation of the scope decision table 224. However, other implementations are possible, such as omitting the column 230a and using program logic to assign (or not assign) a value based on the evaluation of a row 226.

In some cases, evaluation of rows 226 continues until a matching row is found, which can include the row 226a. In other implementations, the row 226a is omitted, and, if no match is found, a FALSE value is assigned or maintained to indicate that the collective data rule 208 is not in scope for the particular data item (or collection of data items, such as a collection of data items having common values for the antecedents 214 of the individual data rules 212 in the scope decision table 224).

In the case that evaluation of the scope decision table 224 is only used to determine whether a collective data rule is in scope, evaluation of the scope decision table can terminate once a row 226 matching values for a data item being evaluated has been identified. Scope expression 240a represents this scenario, as only an overall value for the scope decision table 224 is used. In another implementation, the scope expression 240b causes information to be stored regarding which individual data rule was in scope in the scope decision table 224. This information can be useful, such in specifying an individual data rule 212 to be evaluated for correctness (e.g., if the consequents of the rule are consistent with a particular data item being evaluated), or for tracking statistics as to which individual data rules are in scope for a given data set or collective data rule 208.

In some cases, different individual data rules 212 can have different specificities. That is, consider two rules, one having a single antecedent 214 of FIRST = X, and a second rule having the single antecedent of FIRST = X and a second antecedent of SECOND = Y. A data item having FIRST = X and SECOND = Y will satisfy both rules. In some cases, the scope decision table 224 can be structured such that rules having overlapped antecedent values are ordered in a particular way, such as having narrower rules before broader rules, or having broader rules before narrower rules.

If the scope decision table 224 is being evaluated simply to determine if any rule is in scope, then it can be beneficial to include broader rules before narrower rules, as processing of the scope decision table 224 can be faster and more efficient. If the scope decision table 224 is being used to identify which individual data rule should be evaluated for consequent correctness, then it may be beneficial to include narrower rules before broader rules.

Continuing the above example, the first rule with the single antecedent 214 may have a consequent of THIRD = A, while the second rule with two antecedents may have a consequent of THIRD = B. Even though the example data item would satisfy both individual data rules 212, typically the values associated with the most specific individual data rule met by a given data item are used for evaluation/assignment.

It may be useful to structure the scope decision table 224 in a manner other than that which produces higher processing efficiencies. For example, artifacts generated for a collective data rule 208 can include a condition decision table 250. The condition decision table 250 is typically structured having narrower rules before (e.g., higher in the table) broader rules, to help ensure that the consequents 216 of the most specific rule are used for evaluation/assignment for a given data item.

It can be useful to structure the scope decision table 224 in the same manner as the condition decision table 250, so there is a correspondence between the tables and the tables are more intuitive for a user to understand. However, in some cases, the scope decision table 224 can be displayed to the user in narrowest to broadest format, like the condition decision table 250, but the version of the scope decision table used for evaluation can be structured in broadest to narrowest format. Note that when a row representing a default outcome is provided, such as row 226a, that row is typically included in the scope decision table 224 as the last row, or is otherwise evaluated last.

In cases where multiple individual data rules 212 may be simultaneously in scope, either because they have overlapping antecedents 214 or because they include different antecedents (e.g., one rule uses FIRST and another uses SECOND), evaluation of the scope decision table 224 can include tracking individual data rules that are in scope (e.g., rows whose operands are matched). For instance, each row 226 (other than row 226a, in some cases) can be associated with a value, such as a Boolean value for a Boolean variable, indicating whether the associated individual data rule 212 is in scope for the particular data item being evaluated. Information about individual data rules 212 and collective data rules 208 that are in scope can be presented in a report provided regarding the analysis of a data set using one or more collective data rules.

The condition decision table 250 can be also be structured with rows 254 corresponding to individual data rules 212 in the collective data rule 208. If desired, some of the information in the scope decision table 224 can be omitted from the condition decision table 250. For example, the scope decision table 224 is shown as having a column 230b that can be used to reflect a data selection condition that is not necessarily included in an individual data rule 212 as an antecedent 214.

In at least some cases, an equivalent column to the column 230b is not included in the condition decision table 250. In particular, such a column can be omitted because the condition decision table 250 is typically only evaluated for data items that are already known to be in scope, including satisfying any data selection conditions. That is, the condition decision table 250 may only be evaluated for those data items where a positive result was returned during evaluation of the scope decision table 224 with respect to that data item.

Otherwise, the condition decision table 250 typically includes columns for each antecedent 214 in an individual data rule 212 of the collective data rule 208, or at least those antecedents whose value makes a difference in a value of a consequent 216 that is to be assigned or checked for consistency with an individual data rule. As illustrated, the individual data rules 212 include a single antecedent 214, and so the condition decision table 250 includes a column 258a for this antecedent, where each row 254 of the condition decision table includes different values for this antecedent (and more generally, for tables with columns for multiple antecedents, a value of at least one antecedent differs between any two rows of the condition decision table).

While the scope decision table 224 included a column 230a having a value indicating whether an individual data rule 212 associated with a particular row 226 was in scope (i.e., its antecedents 214 were met), the condition decision table 250 can include a column 258b providing values for a consequent 216 (or multiple consequents) associated with the corresponding individual data rule. In the case where one or more individual data rules 212 in the collective data rule 208 are associated with multiple consequents, the condition decision table can include a column (e.g., similar to column 254b) for each consequent. In some implementations, a condition decision table 250 can include a column analogous to column 230 of the scope decision table 224.

A condition expression, such as condition expression 260a, 260b, or condition 260c, can be evaluated by evaluating the condition decision table 250. Evaluation of the condition expression 260a, 260b, or 260c can include evaluation to determine whether values of a data item being evaluated are consistent with expected values based on the individual data rule 212 satisfied by the data item, or to assign values to a data item based on the individual data rule satisfied by the data item. Although typically collective data rules 208 are structured so that only a single individual data rule 212 of a collective data rule will be satisfied by any given data item, in some cases a collective data rule can include multiple individual data rules 212 that can independently and simultaneously be satisfied by a data item. In such cases, a given data item can be checked for consistency with multiple rows 254 of the condition decision table, or values optionally assigned or suggested based on values of the consequent columns, such as column 250b.

In a similar manner as the scope expressions 240a, 240b, the condition expressions 260a, 260b, 260c can analyze and return different information. Condition expression 260a is shown as returning a value of TRUE if the values for the antecedent column 258a and the consequent column 258b are met. Condition expression 260b includes the same information as condition expression 260a, but also returns an identifier for the particular individual data rule 212 that was satisfied by the data item being evaluated. Condition expression 260c includes the same information as condition expression 260b, but also includes the expected consequent value associated with the corresponding individual data rule 212. In the case where multiple individual data rules 212 can simultaneously be met, condition expressions 260b, 260c can include information for such multiple individual data rules.

Typically, rows of the condition expression table 250 are evaluated until a matching row 254 is identified. In other cases, such as if multiple rows 254 might match a given data item, all rows of the condition expression table can be evaluated. In a yet further example, one or more rows of the scope expression table 224 that are satisfied can include identifiers for rows of the condition decision table 250 associated with the corresponding individual data rule 212, and the relevant rows of the condition decision table evaluated.

If the scope expression table 224 is used in conjunction with the condition expression table 250, it is typically known that at least one row 254 of the condition expression table 250 is satisfied, and thus a row corresponding to the row 226a of the scope expression table 224 need not be included. However, in other cases, a row similar to row 226a can be included in the condition expression table 250, including to account for situations where scope expression table 224 or the condition expression table 250 were configured incorrectly.

As describe above, the condition expression table 250 is typically structured, or at least evaluated, such that narrower individual data rules 212 are evaluated before broader data rules.

Although described as implemented in two tables, in some cases functionality of the scope decision table 224 and the condition decision table 250 can be combined in a single table. Typically, such a table includes columns for antecedents and consequents in individual data rules in a collective data rule. Program logic can, among other things, assign values for data item being in scope, and whether the conditions of a relevant individual data rule are satisfied for the data item.

### Example 4- Example Selection of Individual Data Rules for Collective Data Rule

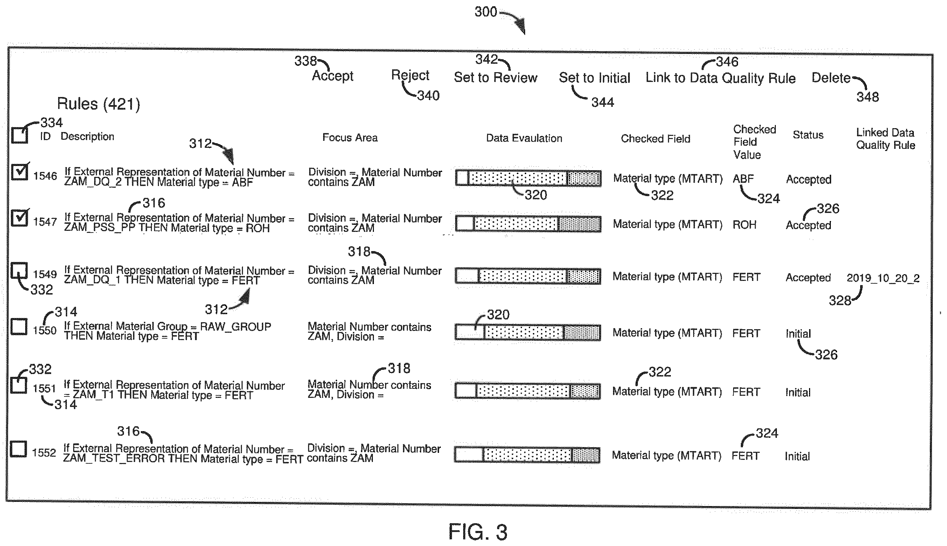

FIG. 3 illustrates an example user interface screen 300 that can allow a user to manually select individual data rules for inclusion in a collective data rule, as well as taking other actions with respect to individual data rules. The screen 300 includes a listing of individual data rules 312, where each individual data rule is associated with an identifier 314. The identifier 314 can be an alpha-numeric identifier for a given individual data rule, and typically is a unique identifier that can be used to access or reference the individual data rule.

The data rule listing can also include descriptions 316 for individual data rules 312. The descriptions 316 can list antecedents and consequents in the rule, and a relationship between the antecedents and consequents, if appropriate. Typically, the relationship is an if/then type relationship. An indication of the focus area 318 of individual data rules 312 can also be provided, where the focus area can represent conditions, such as filter conditions, under which the rules have been found, which in turn can relate to validity statistics for the rule. That is, data may have been filtered by the focus area 318 when rule mining was conducted, and so the existence of the rule, as well as features such as support and confidence, and a proportion of data to which the rule applies, may be valid so long as data is consistent with the focus area. In some cases, a given individual data rule 312 may be valid outside of the focus area 318, but the validity outside of the focus area may need to be separately established

In addition to helping a user understand when individual data rules 312 may be valid, providing an indication of the focus area 318 can assist a user in identifying individual data rules that might have some interrelationship such that they should be considered for inclusion in the same collective data rule (or instead should be included in different collective data rules, or not included in any collective data rules). That is, it may be useful to include multiple data individual data rules that have the same, or overlapping, focus areas 318 in the same collective data rule.

The listing of individual data rules 312 can include summary display elements 320 that provide information regarding the applicability of individual data rules. For example, the display elements 320 may provide a visual (e.g., a graphical, such as in a stacked column/bar graph) indication of applicability statistics for a given individual data rule. The applicability statistics can include one or more of a proportion of a data set for which the individual data rule 312 was found to be in scope, a proportion of the data set for which the individual data rule was found not to be in scope, a proportion of the data set for which the individual data rule was in scope and valid, or a proportion of the data set for which the individual data rule was in scope and was not valid. In particular examples, the visual display elements 320 display a portion of a data set for which the given individual data rule 312 was in scope and a proportion of the data set for which the individual data rule was in scope and valid, or displays this information and additionally displays a proportion of the data set for which the individual data rule was in scope and not valid. Providing the display element 320 can help a user determine the usefulness of a particular individual data rule 312, and whether such rule should be included in a collective data rule for a given data set.

Information provided in the screen 300 for individual data rules 312 can include at least one checked field 322 and checked field value 324 for the rule; that is, one or more fields serving as antecedents and the value of that antecedent in the given rule. The information can further include an indicator 326 indicating whether the given rule has been accepted or not (e.g., a rule might be proposed through automated rule mining, but a user or another process may need to determine whether the rule is actually meaningful/should be made available for use). An indicator 328 can be provided, indicating whether the individual data rule 312 is associated with/assigned to one or more collective data rules.

Each individual data rule 312 can be associated with a selection box 332, which can be used to select a rule to have various actions taken with respect to the rule. A selection box 334 can be provided to select all, or all displayed, individual data rules. Actions to be taken can be triggered via respective user interface controls to accept a rule 338, reject a rule 340, marked a rule for later review 342, to set a rule to an initial state 344 (e.g., such as to clear or reset any previously assigned status, such as accepted, rejected, or marked for review), to link 346 an individual data rule 312 to a collective data rule (either an existing collective data rule, or a collective data rule to be generated), or to delete 348 an individual data rule.

**Example 5- Example User Interface Screen for Configuration and Review of Collective Data Rules**

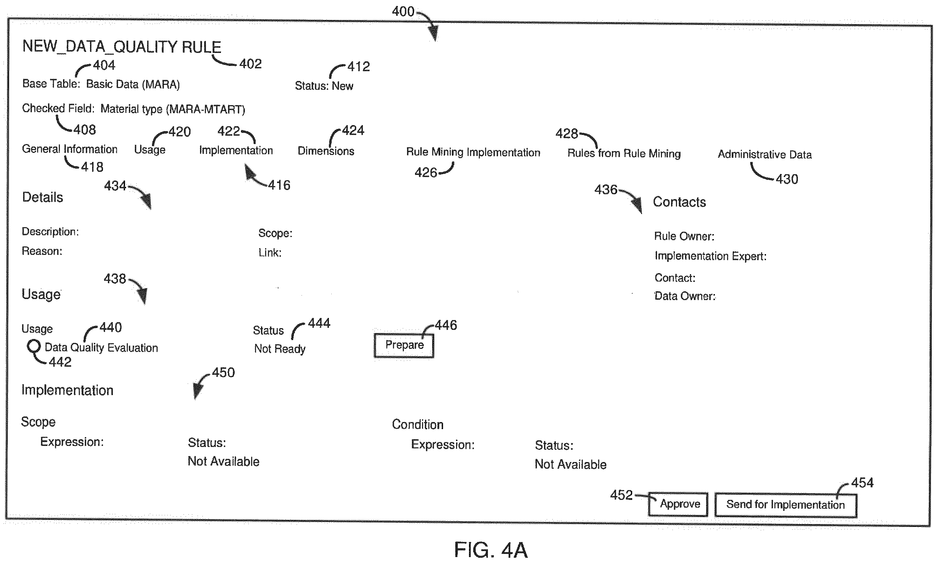

FIG. 4A illustrates a first view of an example user interface screen 400 where a user can configure collective data rules. The screen 400 can provide information about a collective data rule, such as an identifier 402 for the rule and an identifier 404 for one or more base tables (e.g., tables in a relational database system that were mined for individual data rules, or against which individual data rules in a collective data rule will be evaluated) that are used by the collective data rule, where a base table can, for example, have fields that correspond to antecedents or consequents in individual data rules included in the collective data rule. The information can include identifiers 408 for checked fields (e.g., antecedents) associated with individual data rules in the collective data rule. The checked field identifier 408 can correspond with checked fields identified by identifiers 322 of FIG. 3 for individual data rules 312. Collective rule information can also include a status identifier 412, such as indicating whether a rule is new, revised, active, inactive, running, etc.

The screen 400 can provide navigation icons 416 for navigating to various areas of the screen, such as an icon 418 to navigate to a general information area, an icon 420 to navigate to an area that provides usage information, an icon 422 to navigate to an area that provides implementation information (as described below, scope and condition expression artifacts), an icon 424 to navigate to an area that describes dimensions associated with the collective data rule, an icon 426 to navigate to an area that provides rule mining implementation details (as described below, scope and condition decision table artifacts), an icon 428 to navigate to an area that provides information regarding individual data rules from rule mining operations (such as those that are currently included in the collective data rule), and an icon 430 to navigate to an area that includes administrative data.

Dimensions associated with the icon 424 can represent different subcategories used in assessing collective data rules. That is, different collective data rules may be associated with different assessments of data (e.g., completeness, accuracy) or categories of data (e.g., material data, supplier data). In some cases, different dimensions for a different category can be associated with different weightings towards an overall score, such as weighting collective data rules associated with "material data" higher than collective data rules associated with the "supplier data" dimension. In further implementations, analogous weightings can be applied to categories of individual data rules.

A general information area 434 can provide additional basic information about a collective data rule, such as information providing addition description regarding the collective data rule (e.g., a summary of what the collection of individual data rules in the collective data rule is intended to probe), a reason for the collective data rule (e.g., what is indicated by information indicating whether a data item does or does not comply with the collective data rule, or a degree of compliance for a collection of data items in a data set), information regarding the scope of the collective data rule (e.g., for the one or more base tables 404, what fields and field values cause the collective data rule to be in scope), and a link to where additional details regarding the collective data rule may be viewed. The general information area 434 can also provide information 436 for contacts associated with the rule, such as an owner designated for the rule, an individual designated to attend to issues with implementing the collective data rule, a general contact, and an identifier associated with an individual responsible for data being evaluated by the rule.

A usage area 438 can provide information and actions related to use of the collective data rule. In some cases, a collective data rule can be used for multiple purposes. Identifiers 440 can be provided for each such purpose, as well as a selection control 442 that can be used to indicate whether the collective data rule is currently selected for, or active for, such use. Each purpose (e.g., corresponding to an identifier 440) can be associated with a status 444, such as whether the collective data rule is available or ready to be used for the associated purpose.

UI controls for available actions for a given purpose can be presented in the usage area 438. For example, a control 446 can allow a user to prepare a collective data rule for a particular use. Preparing a collective data rule for use can include automatically generating computing artifacts to be used in implementing the collective data rule for the use, such as generating one or more of a scope decision table, a scope expression, a condition decision table, or a condition expression.

An implementation area 450 can provide details regarding artifacts used in implementing a collective data rule, including an identifier for the condition expression and an identifier for the scope expression, as well as a status associated with such expressions. That is, for example, a status may be used to indicate whether a given expression has been generated.

The user interface screen 400 can include controls for causing a collective data rule to be activated, such as to cause a data set to be evaluated by the collective data rule. An approve control 452 can allow a user to indicate that the collective data rule has been approved, and is ready to be executed. A send for implementation control 454 can allow a user to send the collective data rule to a collective data rule execution system, such as a system where collective data rules can be scheduled for execution against a data set or manually set for execution.

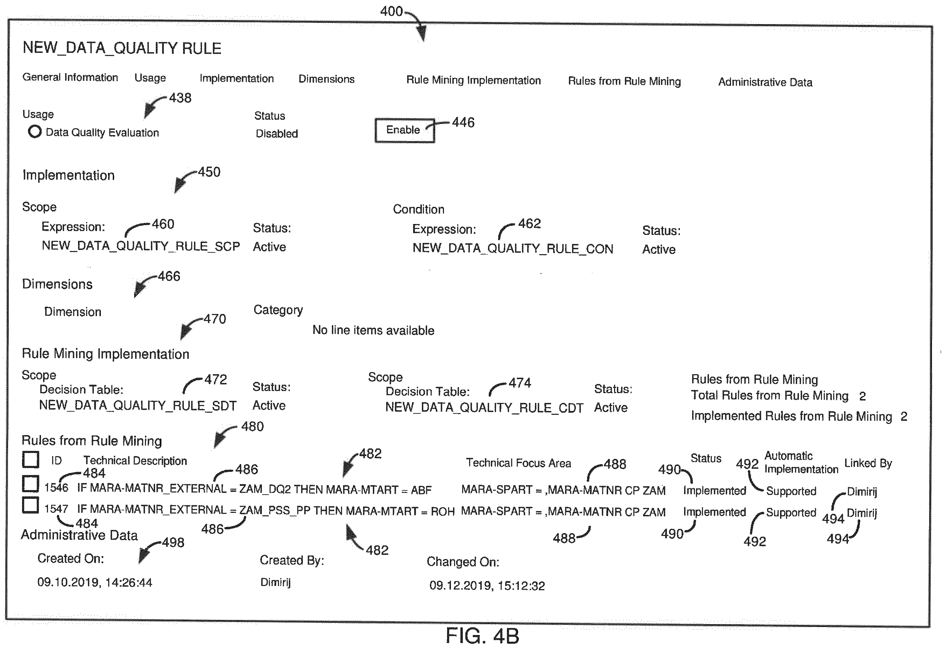

FIG. 4B illustrates changes to the screen 400 that can occur as a user completes a process for creating and implementing a collective data rule. The user interface screen 400 is shown as displaying information in the implementation area 450 illustrating that a scope expression artifact 460 and a condition expression artifact 462 have been created, and are active. The usage area 438 has been updated to indicate that the data quality rule has been disabled, but is available to be enabled by selection of the control 446.

FIG. 4B also illustrates additional portions of the user interface screen 400, such as portions that can be reached by scrolling down the screen. A dimensions area 466 is illustrated as configured to list dimensions and categories associated with the collective data rule, although no information is yet listed in this area in FIG. 4B. FIG. 4B also illustrates a rule mining area 470. The rule mining area 470 can list computing artifacts used in implementing the collective data rule, and the presentation can be at least generally similar to that of the implementation area 450.

That is, the rule mining area 470 provides an identifier 472 for a scope decision table associated with the collective data rule and an identifier 474 for a condition decision table associated with the collective data rule. Status information, such as active, not ready, inactive, and the like, can be provided for the scope decision table and the condition decision table. If the decision table artifacts have not yet been created, the rule mining area 470 can appear similar to how the implementation area 450 appears in FIG. 4A.

An area 480 can list information regarding individual data rules 482 associated with the collective data rule, which information can be generally similar to the information presented in the user interface screen 300 of FIG. 3. The information can include a rule identifier 484, a rule description 486, a focus area 488, a status 490 (e.g., implemented, under review, suspended, inactive, active, and the like), an indicator 492 of whether automatic implementation is supported for the rule, and an identifier 494 of an individual or process which added the individual data rule to the collective data rule.

Automatic implementation, in some cases, can be limited to individual data rules having specific characteristics. For example, automatic implementation might be indicated as supported it the individual data rule has features such as one or more of a threshold confidence value, a threshold support value, a threshold number of antecedents, a threshold number of consequents, a threshold value for the rule being in scope with respect to a given data set, and a threshold value for the rule being in scope and satisfied for a given data set. If a rule cannot be automatically implemented, extra approval or configuration may be needed before the rule can be implemented. In some cases, a user can adjust an individual data rule, such as altering its antecedents or consequents, in order to put the rule in condition for implementation.

An administrative data section 498 can provide information such as a date and time the collective data rule was created, a date and time the collective data rule was modified, or identifiers of users or processes that created or modified the collective data rule.

### Example 6- Example Results User Interface

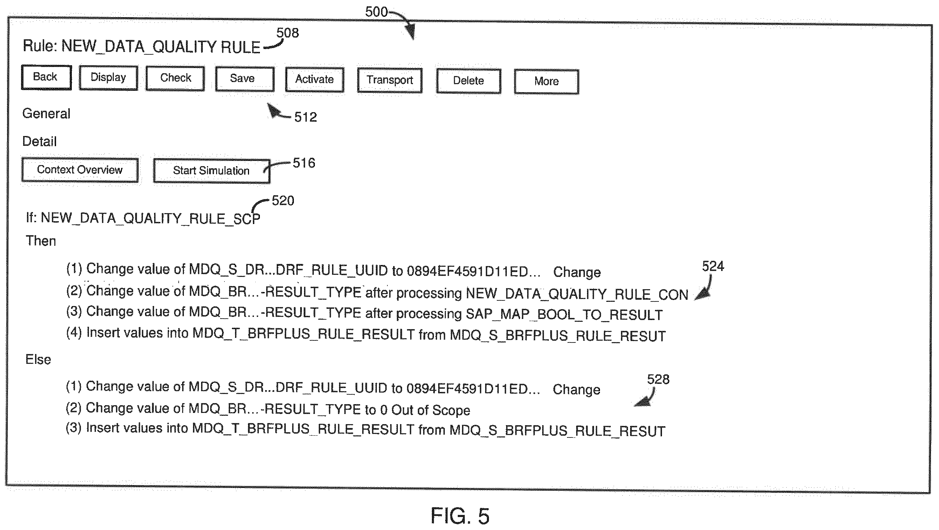

FIG. 5 illustrates an example user interface screen 500 that can allow a user to execute, or edit, a collective data rule, such as a collective data rule defined using the user interface screen 400 of FIGS. 4A and 4B. The user interface screen 500 can provide an identifier 508, such as a name, for the collective data rule. The screen 500 can also provide UI controls 512 for a variety of navigation and other actions that can be taken, including to check whether a collective data rule has been implemented correctly, to save the rule, delete the rule, activate the rule, deactivate the rule, and the like. A UI control 516 can be selected in order to start a simulation or actual analysis of a data set using the collective data rule.

The user interface screen 500 lists an identifier 520 for the relevant scope expression for the data quality rule, and includes a summary of actions 524 that can be taken if the rule is in scope (e.g., determine whether particular data complies with the rule, and return TRUE/FALSE), and a summary of actions 528 that can be taken if the rule is not in scope (e.g., return an indication that the rule is out of scope for particular data). The actions 524, 528 can include actions that are used to generate execution results that can be returned to a user, such as information useable to determine a percentage of data having a rule in scope, in scope and valid, in scope and invalid, or summarizing actual values that exist for data items for which the collective data rule was in scope, but invalid. In particular examples, the actions 524, 528 can be automatically generated when a user selects to implement a collective data rule.

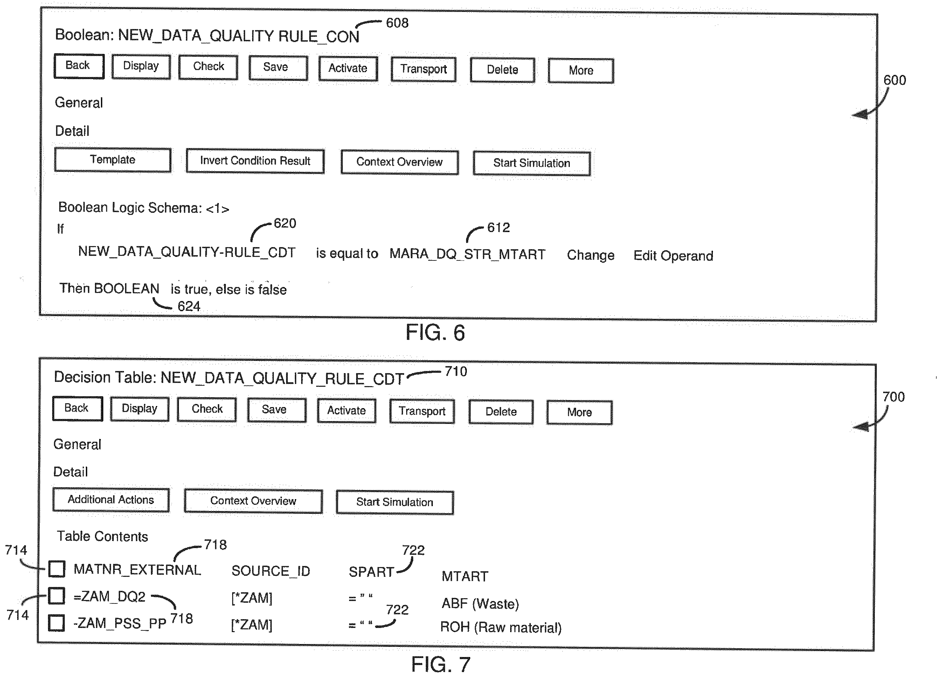

The identifier 520 for the scope expression can indicate a particular scope expression artifact, which in turn can reference a scope decision table. Actions 524, when a rule is in scope, can refer to a condition expression artifact, such as the artifact shown in FIG. 6, which in turn can reference a condition decision table, such as illustrated in FIG. 7.

**Example 7- Example User Interface Screens for Condition Artifacts**

FIG. 6 is an example user interface screen 600 representing a display of information related to a condition expression 608. In particular, the screen 600 specifies a data set 612, such as table, to be evaluated using the condition expression 608, and a particular operator 616 (e.g., a logical equality operator) to be applied during the evaluation. The condition expression 608 is shown as including conditions 620 (including a reference to a condition decision table, such as the condition decision table shown in FIG. 7) that will be used to evaluate the data set 612 (e.g., is data in the data set 612 consistent with the conditions), and results 624 that will apply depending on whether the conditions are met. The results 624 can be, for example, setting the value of a Boolean variable to TRUE or FALSE.

FIG. 7 is an example user interface screen 700 providing an example implementation of a condition decision table 710. The condition decision table 710 lists, for individual data rules 714 in the collective data rule, antecedents 718 in the rule and consequents 722 in the rule.

**Example 8- Example Methods of Automatically Generating Computing Artifacts for Implementing Collective Data Rules**

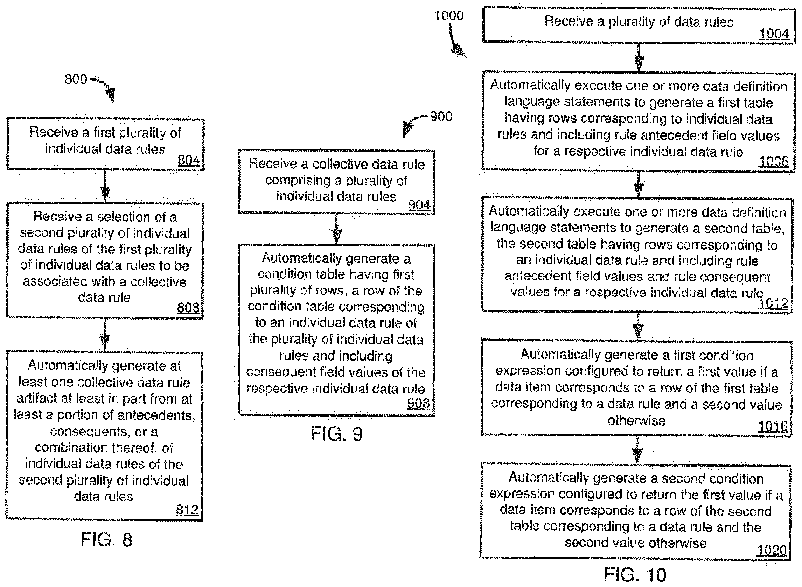

FIG. 8 is a flowchart of a method 800 for automatically generating at least one collective data rule artifact that can be used in evaluating data for compliance with a collective data rule. At 804, a first plurality of individual data rules is received. An individual data rule includes one or more antecedents and one or more consequents.

A selection of a second plurality of individual data rules of the first plurality of individual data rules is received at 808, where the second plurality of individual data rules are to be associated with a collective data rule. At 812, at least one collective data rule artifact is automatically generated at least in part from at least a portion of the antecedents, consequents, or a combination thereof, of individual data rules of the second plurality of individual data rules.

FIG. 9 is a flowchart of a method 900 for automatically generating a condition table (i.e., a condition decision table) that can be used in analyzing data items for compliance with a collective data rule. At 904, a collective data rule is received that includes a plurality of individual data rules. An individual data rule includes one or more antecedent fields and corresponding antecedent field values and one or more consequent fields and corresponding consequent field values. A condition table is automatically generated at 908. The condition table includes a plurality of rows, where a row corresponds to an individual data rule of the plurality of individual data rules and includes the consequent field values of the respective individual data rule.

FIG. 10 is a flowchart of a method 1000 for automatically generating a plurality of computing artifacts that can be used in evaluating whether data items (such as data from one or more database tables, including data from a single row of a single database table) complies with a collective data rule. At 1004, a plurality of data rules (e.g., individual data rules) are received. A data rule includes one or more database fields and corresponding field values corresponding to rule antecedents and one or more database fields and corresponding field values corresponding to rule consequents. One or more data definition language statements are automatically executed at 1008 to generate a first table. The first table has a plurality of rows. A given row corresponding to a data rule of the plurality of data rules and includes rule antecedent field values for the given data rule.

At 1012, one or more data definition language statements are automatically executed to generate a second table. The second table has a plurality of rows. A given row corresponds to a data rule of the plurality of data rules and includes rule antecedent field values and rule consequent values for the given data rule. A first condition expression is automatically generated at 1016. The first condition expression is configured to return a first value if a data item corresponds to a row of the first table corresponding to a data rule and a second value otherwise. At 1020, a second condition expression is automatically generated. The second condition expression is configured to return the first value if a data item corresponds to a row of the second table corresponding to a data rule and the second value otherwise.

**Example 8 - Computing Systems**

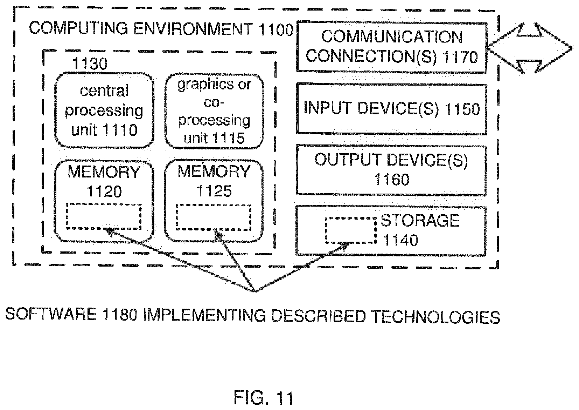

FIG. 11 depicts a generalized example of a suitable computing system 1100 in which the described innovations may be implemented. The computing system 1100 is not intended to suggest any limitation as to scope of use or functionality of the present disclosure, as the innovations may be implemented in diverse general-purpose or special-purpose computing systems.

With reference to FIG. 11, the computing system 1100 includes one or more processing units 1110, 1115 and memory 1120, 1125. In FIG. 11, this basic configuration 1130 is included within a dashed line. The processing units 1110, 1115 execute computer-executable instructions, such as for implementing components of the computing environment 100 of FIG. 1. A processing unit can be a general-purpose central processing unit (CPU), processor in an application-specific integrated circuit (ASIC), or any other type of processor. In a multi-processing system, multiple processing units execute computer-executable instructions to increase processing power. For example, FIG. 11 shows a central processing unit 1110 as well as a graphics processing unit or co-processing unit 1115. The tangible memory 1120, 1125 may be volatile memory (e.g., registers, cache, RAM), non-volatile memory (e.g., ROM, EEPROM, flash memory, etc.), or some combination of the two, accessible by the processing unit(s) 1110, 1115. The memory 1120, 1125 stores software 1180 implementing one or more innovations described herein, in the form of computer-executable instructions suitable for execution by the processing unit(s) 1110, 1115.

A computing system 1100 may have additional features. For example, the computing system 1100 includes storage 1140, one or more input devices 1150, one or more output devices 1160, and one or more communication connections 1170. An interconnection mechanism (not shown) such as a bus, controller, or network interconnects the components of the computing system 1100. Typically, operating system software (not shown) provides an operating environment for other software executing in the computing system 1100, and coordinates activities of the components of the computing system 1100.

The tangible storage 1140 may be removable or non-removable, and includes magnetic disks, magnetic tapes or cassettes, CD-ROMs, DVDs, or any other medium which can be used to store information in a non-transitory way and which can be accessed within the computing system 1100. The storage 1140 stores instructions for the software 1180 implementing one or more innovations described herein.

The input device(s) 1150 may be a touch input device such as a keyboard, mouse, pen, or trackball, a voice input device, a scanning device, or another device that provides input to the computing system 1100. The output device(s) 1160 may be a display, printer, speaker, CD-writer, or another device that provides output from the computing system 1100.

The communication connection(s) 1170 enable communication over a communication medium to another computing entity. The communication medium conveys information such as computer-executable instructions, audio or video input or output, or other data in a modulated data signal. A modulated data signal is a signal that has one or more of its characteristics set or changed in such a manner as to encode information in the signal. By way of example, and not limitation, communication media can use an electrical, optical, RF, or other carrier.

The innovations can be described in the general context of computer-executable instructions, such as those included in program modules, being executed in a computing system on a target real or virtual processor. Generally, program modules or components include routines, programs, libraries, objects, classes, components, data structures, etc. that perform particular tasks or implement particular abstract data types. The functionality of the program modules may be combined or split between program modules as desired in various embodiments. Computer-executable instructions for program modules may be executed within a local or distributed computing system.

The terms "system" and "device" are used interchangeably herein. Unless the context clearly indicates otherwise, neither term implies any limitation on a type of computing system or computing device. In general, a computing system or computing device can be local or distributed, and can include any combination of special-purpose hardware and/or general-purpose hardware with software implementing the functionality described herein.

In various examples described herein, a module (e.g., component or engine) can be "coded" to perform certain operations or provide certain functionality, indicating that computer-executable instructions for the module can be executed to perform such operations, cause such operations to be performed, or to otherwise provide such functionality. Although functionality described with respect to a software component, module, or engine can be carried out as a discrete software unit (e.g., program, function, class method), it need not be implemented as a discrete unit. That is, the functionality can be incorporated into a larger or more general-purpose program, such as one or more lines of code in a larger or general-purpose program.

For the sake of presentation, the detailed description uses terms like "determine" and "use" to describe computer operations in a computing system. These terms are high-level abstractions for operations performed by a computer, and should not be confused with acts performed by a human being. The actual computer operations corresponding to these terms vary depending on implementation.

## Example 9 - Cloud Computing Environment

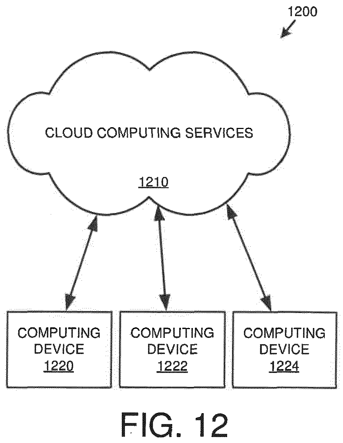

FIG. 12 depicts an example cloud computing environment 1200 in which the described technologies can be implemented. The cloud computing environment 1200 comprises cloud computing services 1210. The cloud computing services 1210 can comprise various types of cloud computing resources, such as computer servers, data storage repositories, networking resources, etc. The cloud computing services 1210 can be centrally located (e.g., provided by a data center of a business or organization) or distributed (e.g., provided by various computing resources located at different locations, such as different data centers and/or located in different cities or countries).

The cloud computing services 1210 are utilized by various types of computing devices (e.g., client computing devices), such as computing devices 1220, 1222, and 1224. For example, the computing devices (e.g., 1220, 1222, and 1224) can be computers (e.g., desktop or laptop computers), mobile devices (e.g., tablet computers or smart phones), or other types of computing devices. For example, the computing devices (e.g., 1220, 1222, and 1224) can utilize the cloud computing services 1210 to perform computing operators (e.g., data processing, data storage, and the like).

## Example 10 - Implementations

Although the operations of some of the disclosed methods are described in a particular, sequential order for convenient presentation, it should be understood that this manner of description encompasses rearrangement, unless a particular ordering is required by specific language set forth below. For example, operations described sequentially may in some cases be rearranged or performed concurrently. Moreover, for the sake of simplicity, the attached figures may not show the various ways in which the disclosed methods can be used in conjunction with other methods.

Any of the disclosed methods can be implemented as computer-executable instructions or a computer program product stored on one or more computer-readable storage media, such as tangible, non-transitory computer-readable storage media, and executed on a computing device (e.g., any available computing device, including smart phones or other mobile devices that include computing hardware). Tangible computer-readable storage media are any available tangible media that can be accessed within a computing environment (e.g., one or more optical media discs such as DVD or CD, volatile memory components (such as DRAM or SRAM), or nonvolatile memory components (such as flash memory or hard drives)). By way of example, and with reference to FIG. 11, computer-readable storage media include memory 1120 and 1125, and storage 1140. The term computer-readable storage media does not include signals and carrier waves. In addition, the term computer-readable storage media does not include communication connections (e.g., 1170).

Any of the computer-executable instructions for implementing the disclosed techniques as well as any data created and used during implementation of the disclosed embodiments can be stored on one or more computer-readable storage media. The computer-executable instructions can be part of, for example, a dedicated software application or a software application that is accessed or downloaded via a web browser or other software application (such as a remote computing application). Such software can be executed, for example, on a single local computer (e.g., any suitable commercially available computer) or in a network environment (e.g., via the Internet, a wide-area network, a local-area network, a client-server network (such as a cloud computing network), or other such network) using one or more network computers.

For clarity, only certain selected aspects of the software-based implementations are described. Other details that are well known in the art are omitted. For example, it should be understood that the disclosed technology is not limited to any specific computer language or program. For instance, the disclosed technology can be implemented by software written in C, C++, C#, Java, Perl, JavaScript, Python, R, Ruby, ABAP, SQL, XCode, GO, Adobe Flash, or any other suitable programming language, or, in some examples, markup languages such as html or XML, or combinations of suitable programming languages and markup languages. Likewise, the disclosed technology is not limited to any particular computer or type of hardware. Certain details of suitable computers and hardware are well known and need not be set forth in detail in this disclosure.

Furthermore, any of the software-based embodiments (comprising, for example, computer-executable instructions for causing a computer to perform any of the disclosed methods) can be uploaded, downloaded, or remotely accessed through a suitable communication means. Such suitable communication means include, for example, the Internet, the World Wide Web, an intranet, software applications, cable (including fiber optic cable), magnetic communications, electromagnetic communications (including RF, microwave, and infrared communications), electronic communications, or other such communication means.

The disclosed methods, apparatus, and systems should not be construed as limiting in any way. Instead, the present disclosure is directed toward all novel and nonobvious features and aspects of the various disclosed embodiments, alone and in various combinations and sub combinations with one another. The disclosed methods, apparatus, and systems are not limited to any specific aspect or feature or combination thereof, nor do the disclosed embodiments require that any one or more specific advantages be present or problems be solved.

The technologies from any example can be combined with the technologies described in any one or more of the other examples. In view of the many possible embodiments to which the principles of the disclosed technology may be applied, it should be recognized that the illustrated embodiments are examples of the disclosed technology.

## Claims

1.   A method (800), implemented by at least one computing device comprising at least one processor and one or more memories coupled to the at least one processor, comprising:

receiving (804) a first plurality of individual data rules (116), wherein an individual data rule of the first plurality of individual data rules (116) comprises one or more antecedents (118) and one or more consequents (120), wherein the first plurality of individual data rules (116) is mined by executing a rule mining algorithm (112) on at least a portion of database tables (104);

receiving (808) a selection of a second plurality of individual data rules (116) of the first plurality of individual data rules (116) to be associated with a collective data rule (138, 208); and

automatically generating (812) at least one collective data rule artifact (166) at least in part from at least a portion of the antecedents (118), the consequents (120), or a combination thereof, of individual data rules of the second plurality of individual data rules (116),

wherein the automatically generating (812) at least one collective data rule artifact (166) comprises:

generating a first table in a relational database system, the first table comprising the at least a portion of the antecedents (118), the consequents (120), or the combination thereof as attributes of the first table,

generating a scope decision table (172, 224), the scope decision table (172, 224) comprising rows corresponding to individual data rules of the second plurality of individual data rules (116), wherein a row of the scope decision table (172, 224) corresponding to an individual data rule comprises values for antecedents (118) of the individual data rule,

wherein the scope decision table (172, 224) comprises a default row having a wildcard value for attributes of the first table corresponding to rule consequents (120), and

wherein at least one row of the scope decision table (172, 224) corresponding to an individual data rule of the second plurality of individual data rules (116) does not require a particular value or values for an antecedent (118) of the scope decision table (172, 224), and

generating a condition decision table (176), the condition decision table (176) comprising rows corresponding to individual data rules of the second plurality of data rules, wherein a row of the condition decision table (176) corresponding to an individual data rule comprises values for consequents (120) of the individual data rule, and

wherein the at least one collective data rule artifact (166) is used to evaluate a data set of the database tables (104),

wherein the automatically generating (812) at least one data rule further comprises:

generating a scope expression (240a, 240b), the scope expression (240a, 240b) being configured to be used to evaluate the scope decision table (172, 224) and return a Boolean value based on the evaluation of the scope decision table (172, 224) indicating whether a given data item has values that match a row (226) of the scope decision table (172, 224).

2. The method of claim 1, wherein the automatically generating at least one collective data rule artifact (166) comprises generating, using Structured Query Language (SQL), one or more data definition language statements to create or modify the first table to include the attributes.

3. The method of any one of the preceding claims, wherein antecedents (118) and consequents (120) of the second plurality of individual data rules (116) comprise an attribute of at least a second table and at least one value for the attribute of the at least a second table.

4. The method of claim 3, further comprising inserting the at least one values for respective antecedents (118) or consequents (120) in a given individual data rule of the second plurality of data rules in a row corresponding to the given individual data rule in the first table, the value being assigned to an attribute corresponding to the respective antecedent (118) or consequent (120).

5. The method of any one of claims 1 to 4, wherein the first table comprises a return value attribute indicating whether a given data item matches values for a row associated with an individual data rule of the second plurality of individual data rules (116) and a value of the attribute for the default row indicates that the data item does not match an individual data rule of the second plurality of individual data rules (116).

6. The method of any one of claims 1 to 5, wherein the automatically generating (812) at least one collective data rule artifact (166) further comprises:
generating a condition expression, the condition expression is configured to be used to analyze the condition decision table (176) and return a Boolean value indicating whether a given data item has values that match a row of the condition decision table (176).

7. The method of any one of the preceding claims, further comprising:

generating a display comprising identifiers for the first plurality of individual data rules (116) and comprising at least one control to allow selection of the second plurality of individual data rules (116), and
wherein, preferably, the method further comprising:
on the display, displaying rule statistics for at least a portion of the first plurality of individual data rules (116), the statistics indicating, for a given individual data rule, a proportion of data items in a data set corresponding to an individual data rule of the second plurality of individual data rules (116).

8. A computing system comprising:

memory;
one or more processing units coupled to the memory; and
one or more computer readable storage media storing instructions which, when executed by the one or more processing units, cause the one or more processing units to perform for the method as claimed in any one of claims 1-7.

9. One or more computer-readable media comprising:
computer executable instructions which, when executed by a computer, cause the computer to perform the method as claimed in any one of claims 1-8.

**Patentansprüche**

1. Verfahren (800), das durch mindestens eine Rechenvorrichtung implementiert wird, die mindestens einen Prozessor und einen oder mehrere Speicher umfasst, der/die mit dem mindestens einen Prozessor gekoppelt ist/sind, umfassend:

Empfangen (804) einer ersten Mehrzahl von individuellen Datenregeln (116), wobei eine individuelle Datenregel der ersten Mehrzahl von individuellen Datenregeln (116) eine oder mehrere Vorhergehende (118) und eine oder mehrere Nachfolgende (120) umfasst, wobei die erste Mehrzahl von individuellen Datenregeln (116) durch Ausführen eines Regelanalysealgorithmus (112) mit mindestens einem Teil von Datenbanktabellen (104) analysiert wird;
Empfangen (808) einer Auswahl einer zweiten Mehrzahl von individuellen Datenregeln (116) der ersten Mehrzahl von individuellen Datenregeln (116), die mit einer kollektiven Datenregel (138, 208) verknüpft werden sollen; und
automatisches Erzeugen (812) mindestens eines kollektiven Datenregelartefakts (166) mindestens teilweise aus mindestens einem Teil der Vorhergehenden (118), der Nachfolgenden (120) oder einer Kombination davon, von individuellen Datenregeln der zweiten Mehrzahl von individuellen Datenregeln (116),
wobei das automatische Erzeugen (812) mindestens eines kollektiven Datenregelartefakts (166) umfasst:

Erzeugen einer ersten Tabelle in einem relationalen Datenbanksystem, wobei die erste Tabelle den mindestens einen Teil der Vorhergehenden (118), der Nachfolgenden (120) oder der Kombination davon als Eigenschaften der ersten Tabelle umfasst,
Erzeugen einer Umfangsentscheidungstabelle (172, 224), wobei die Umfangsentscheidungstabelle (172, 224) Zeilen umfasst, die individuellen Datenregeln der zweiten Mehrzahl von individuellen Datenregeln (116) entspricht, wobei eine Zeile der Umfangsentscheidungstabelle (172, 224), die einer individuellen Datenregel entspricht, Werte für Vorhergehende (118) der individuellen Datenregel umfasst,

wobei die Umfangsentscheidungstabelle (172, 224) eine Standardzeile mit einem Wildcard-Wert für Eigenschaften der ersten Tabelle umfasst, die Regel-Nachfolgenden (120) entsprechen, und
wobei mindestens eine Zeile der Umfangsentscheidungstabelle (172, 224), die einer individuellen Datenregel der zweiten Mehrzahl von individuelle Datenregeln (116) entspricht, keine(n) bestimmte(n) Wert(e) für eine Vorhergehende (118) der Umfangsentscheidungstabelle (172, 224) erfordert, und

Erzeugen einer Bedingungsentscheidungstabelle (176), wobei die Bedingungsentscheidungstabelle (176) Zeilen umfasst, die individuellen Datenregeln der zweiten Mehrzahl von Datenregeln entsprechen, wobei eine Zeile der Bedingungsentscheidungstabelle (176), die einer individuellen Datenregel entspricht, Werte für Nachfolgende (120) der individuellen Datenregel umfasst, und

wobei das mindestens eine kollektive Datenregelartefakt (166) zur Bewertung eines Datensatzes der Datenbanktabellen (104) verwendet wird,

wobei das automatische Erzeugen (812) mindestens einer Datenregel ferner umfasst:

Erzeugen eines Umfangsausdrucks (240a, 240b), wobei der Umfangsausdruck (240a, 240b) so ausgebildet ist, dass er zur Bewertung der Umfangsentscheidungstabelle (172, 224) verwendet wird und einen Boole'schen Wert auf der Basis der Bewertung der Umfangsentscheidungstabelle (172, 224) zurückgibt, der angibt, ob ein gegebener Datengegenstand Werte aufweist, die mit einer Zeile (226) der Umfangsentscheidungstabelle (172, 224) übereinstimmen.

2. Verfahren nach Anspruch 1, wobei das automatische Erzeugen mindestens eines kollektiven Datenregelartefakts (166) das Erzeugen, unter Verwendung einer "Structured Query Language" (SQL), einer oder mehrerer Datendefinitionssprachangabe(n) zum Erzeugen oder Modifizieren der ersten Tabelle umfasst, derart, dass sie die Eigenschaften umfasst.

3. Verfahren nach einem der vorhergehenden Ansprüche, wobei Vorhergehende (118) und Nachfolgende (120) der zweiten Mehrzahl von individuellen Datenregeln (116) eine Eigenschaft von mindestens einer zweiten Tabelle und mindestens einen Wert für die Eigenschaft der mindestens einen zweiten Tabelle umfassen.

4. Verfahren nach Anspruch 3, das ferner das Einsetzen des mindestens einen Werts für jeweilige Vorhergehende (118) oder Nachfolgende (120) in einer gegebenen individuellen Datenregel der zweiten Mehrzahl von Datenregeln in eine Zeile umfasst, die der gegebenen individuellen Datenregel in der ersten Tabelle entspricht, wobei der Wert einer Eigenschaft zugeordnet ist, die der jeweiligen Vorhergehenden (118) oder Nachfolgenden (120) entspricht.

5. Verfahren nach einem der Ansprüche 1 bis 4, wobei die erste Tabelle eine Rückgabewerteigenschaft umfasst, die angibt, ob ein gegebener Datengegenstand mit Werten für eine Zeile übereinstimmt, die mit einer individuellen Datenregel der zweiten Mehrzahl von individuellen Datenregeln (116) verknüpft ist, und ein Wert der Eigenschaft für die Standardzeile angibt, dass der Datengegenstand nicht mit einer individuellen Datenregel der zweiten Mehrzahl von individuellen Datenregeln (116) übereinstimmt.

6. Verfahren nach einem der Ansprüche 1 bis 5, wobei das automatische Erzeugen (812) mindestens eines kollektiven Datenregelartefakts (166) ferner umfasst:

Erzeugen eines Bedingungsausdrucks, wobei der Bedingungsausdruck zur Verwendung zur Analyse der Bedingungsentscheidungstabelle (176) und zur Rückgabe eines Boole'schen Werts ausgebildet ist, der angibt, ob ein gegebener Datengegenstand Werte aufweist, die mit einer Zeile der Bedingungsentscheidungstabelle (176) übereinstimmen.

7. Verfahren nach einem der vorhergehenden Ansprüche, ferner umfassend:

Erzeugen einer Anzeige, die Kennungen für die erste Mehrzahl von individuellen Datenregeln (116) umfasst und mindestens eine Steuerfläche zum Ermöglichen einer Auswahl der zweiten Mehrzahl von individuellen Datenregeln (116) umfasst, und

wobei das Verfahren vorzugsweise ferner umfasst:

Anzeigen einer Regelstatistik für mindestens einen Teil der ersten Mehrzahl von individuellen Datenregeln (116) auf der Anzeige, wobei die Statistik für eine gegebene individuelle Datenregel einen Anteil von Datengegenständen in einem Datensatz angibt, die einer individuellen Datenregel der zweiten Mehrzahl von individuellen Datenregeln (116) entsprechen.

8. Rechensystem, umfassend:

Speicher;

eine oder mehrere Verarbeitungseinheit(en), die mit dem Speicher gekoppelt ist/sind; und

eine oder mehrere computerlesbare(s) Speichermedium/medien, das/die Anweisungen speichert/speichern, die, wenn sie durch die eine oder die mehreren Verarbeitungseinheit(en) ausgeführt werden, bewirken, dass die eine oder die mehreren Verarbeitungseinheit(en) das Verfahren nach einem der Ansprüche 1-7 ausführt/ausführen.

9. Ein oder mehrere computerlesbare(s) Medium/Medien, umfassend:
   computerausführbare Anweisungen, die, wenn sie durch einen Computer ausgeführt werden, bewirken, dass der Computer das Verfahren nach einem der Ansprüche 1-8 ausführt.


**Revendications**

1. Procédé (800), mis en œuvre par au moins un dispositif informatique comprenant au moins un processeur et une ou plusieurs mémoires couplées à l'au moins un processeur, comprenant :

   recevoir (804) une première pluralité de règles de données individuelles (116), dans lequel une règle de données individuelle de la première pluralité de règles de données individuelles (116) comprend un ou plusieurs antécédents (118) et un ou plusieurs conséquents (120), dans lequel la première pluralité de règles de données individuelles (116) est explorée en exécutant un algorithme d'exploration de règle (112) sur au moins une portion de tables de base de données (104) ;
   recevoir (808) une sélection d'une seconde pluralité de règles de données individuelles (116) de la première pluralité de règles de données individuelles (116) devant être associée à une règle de données collective (138, 208) ; et
   générer automatiquement (812) au moins un artéfact de règle de données collective (166) au moins en partie à partir d'au moins une portion des antécédents (118), des conséquents (120), ou d'une combinaison de ceux-ci, de règles de données individuelles de la seconde pluralité de règles de données individuelles (116),
   dans lequel la génération automatique (812) d'au moins un artéfact de règle de données collective (166) comprend :

   générer une première table dans un système de base de données relationnelle, la première table comprenant l'au moins une portion des antécédents (118), des conséquents (120) ou la combinaison de ceux-ci en tant qu'attributs de la première table,
   générer une table de décision de portée (172, 224), la table de décision de portée (172, 224) comprenant des rangées correspondant à des règles de données individuelles de la seconde pluralité de règles de données individuelles (116), dans lequel une rangée de la table de décision de portée (172, 224) correspondant à une règle de données individuelle comprend des valeurs pour des antécédents (118) de la règle de données individuelle,
   dans lequel la table de décision de portée (172, 224) comprend une rangée par défaut ayant une valeur de remplacement pour des attributs de la première table correspondant à des conséquents de règle (120), et dans lequel au moins une rangée de la table de décision de portée (172, 224) correspondant à une règle de données individuelle de la seconde pluralité de règles de données individuelles (116) ne requiert pas de valeur particulière ou de valeurs pour un antécédent (118) de la table de décision de portée (172, 224), et
   générer une table de décision de condition (176), la table de décision de condition (176) comprenant des rangées correspondant à des règles de données individuelles de la seconde pluralité de règles de données,
   dans lequel une rangée de la table de décision de condition (176) correspondant à une règle de données individuelle comprend des valeurs pour des conséquents (120) de la règle de données individuelle, et
   dans lequel l'au moins un artéfact de règle de données collective (166) est utilisé pour évaluer un ensemble de données des tables de base de données (104),
   dans lequel la génération automatique (812) d'au moins une règle de données comprend en outre :
   générer une expression de portée (240a, 240b), l'expression de portée (240a, 240b) étant configurée pour être utilisée pour évaluer la table de décision de portée (172, 224) et renvoyer une valeur booléenne en fonction de l'évaluation de la table de décision de portée (172, 224) indiquant si un élément de données donné a des valeurs qui correspondent à une rangée (226) de la table de décision de portée (172, 224).

2. Procédé selon la revendication 1, dans lequel la génération automatique d'au moins un artéfact de règle de données collective (166) comprend générer, en utilisant le langage SQL, une ou plusieurs instructions de langage de définition de données pour créer ou modifier la première table pour inclure les attributs.

3. Procédé selon l'une quelconque des revendications précédentes, dans lequel des antécédents (118) et conséquents (120) de la seconde pluralité de règles de données individuelles (116) comprennent un attribut d'au moins une seconde table et au moins une valeur pour l'attribut de l'au moins une seconde table.

**4.** Procédé selon la revendication 3, comprenant en outre insérer les au moins une valeurs pour des antécédents (118) ou conséquents (120) respectifs dans une règle de données individuelle donnée de la seconde pluralité de règles de données dans une rangée correspondant à la règle de données individuelle donnée dans la première table, la valeur étant attribuée à un attribut correspondant à l'antécédent (118) ou au conséquent (120) respectif.

**5.** Procédé selon l'une quelconque des revendications 1 à 4, dans lequel la première table comprend un attribut de valeur de renvoi indiquant si un élément de données donné correspond à des valeurs pour une rangée associée à une règle de données individuelle de la seconde pluralité de règles de données individuelles (116) et une valeur de l'attribut pour la rangée par défaut indique que l'élément de données ne correspond pas à une règle de données individuelle de la seconde pluralité de règles de données individuelles (116).

**6.** Procédé selon l'une quelconque des revendications 1 à 5, dans lequel la génération automatique (812) d'au moins un artéfact de règle de données collective (166) comprend en outre :
générer une expression de condition, l'expression de condition est configurée pour être utilisée pour analyser la table de décision de condition (176) et renvoyer une valeur booléenne indiquant si un élément de données donné a des valeurs qui correspondent à une rangée de la table de décision de condition (176).

**7.** Procédé selon l'une quelconque des revendications précédentes, comprenant en outre :

générer un affichage comprenant des identifiants pour la première pluralité de règles de données individuelles (116) et comprenant au moins une commande pour permettre la sélection de la seconde pluralité de règles de données individuelles (116), et
dans lequel, de préférence, le procédé comprenant en outre :
sur l'affichage, afficher des statistiques de règle pour au moins une portion de la première pluralité de règles de données individuelles (116), les statistiques indiquant, pour une règle de données individuelle donnée, une proportion d'éléments de données dans un ensemble de données correspondant à une règle de données individuelle de la seconde pluralité de règles de données individuelles (116).

**8.** Système informatique comprenant :

de la mémoire ;
une ou plusieurs unités de traitement couplées à la mémoire ; et
un ou plusieurs supports de stockage lisibles par ordinateur stockant des instructions qui, lors de leur exécution par la ou les unités de traitement, amènent la ou les unités de traitement à réaliser le procédé selon l'une quelconque des revendications 1 à 7.

**9.** Support(s) lisible(s) par ordinateur comprenant :
des instructions exécutables par ordinateur qui, lors de leur exécution par un ordinateur, amènent l'ordinateur à réaliser le procédé selon l'une quelconque des revendications 1 à 8.

FIG. 1

EP 3 786 810 B1

**Collective Data Rule: MARA_PRODH_T** — 208

Mined Rules

Data Selection: MARA with PRODH = TOOLS — 216

1) If MARA-MTART = 'FERT' Then MARA-MATKL = 01
2) If MARA-MTART = 'HALB' Then MARA-MATKL = 01
3) If MARA-MTART = 'RAW' Then MARA-MATKL = 01
4) If MARA-MTART = 'HAWA' Then MARA-MATKL = 02

Scope Decision Table - MARA_PRODH_T_SDT

| PRODH | MTART | IN SCOPE? |
|-------|-------|-----------|
| TOOLS | FERT | X |
| TOOLS | HALB | X |
| TOOLS | RAW | X |
| TOOLS | HAWA | X |
| * | * | - |

240a: IF all operands of any row of MARA_PRODH_T_SDT == TRUE, THEN MARA_PRODH_SE = TRUE

240b: IF all operands of any row MARA_PRODH_T_SDT == TRUE, THEN MARA_PRODH_T_SE = TRUE & MARA_PRODH_T_RULE_SCOPE = RULEID

Condition Decision Table – MARA-PRODH_T_CDT

| MTART | MATKL |
|-------|-------|
| FERT | 01 |
| HALB | 01 |
| RAW | 01 |
| HAWA | 02 |

260a: IF all operands of any row of MARA_PRODH_T_CDT == TRUE, THEN MARA_PRODH_T_CE = TRUE

260b: IF all operands of any row of MARA_PRODH_T_CDT == TRUE, THEN MARA_PRODH_T_CE = TRUE & RULE_CONDITION = RULEID

260c: IF all operands of any row of MARA_PRODH_T_CDT == TRUE, THEN MARA_PRODH_T_CE = TRUE & MARA_PRODH_T_RULE_CONDITION = RULEID & MARA_PRODH_T_VALUE = RULE_ID_VALUE

FIG. 2

EP 3 786 810 B1

EP 3 786 810 B1

300

338 Accept  Reject  342 Set to Review  Set to Initial  346 Link to Data Quality Rule  Delete 348
340  344

Rules (421)

334

| ID | Description | Focus Area | Data Evaulation | Checked Field | Checked Field Value | Status | Linked Data Quality Rule |
|---|---|---|---|---|---|---|---|
| 1546 | If External Representation of Material Number = ZAM_DQ_2 THEN Material type = ABF | Division =, Material Number contains ZAM | | Material type (MTART) | ABF | Accepted | |
| 1547 | If External Representation of Material Number = ZAM_PSS_PP THEN Material type = ROH | Division =, Material Number contains ZAM | | Material type (MTART) | ROH | Accepted | |
| 1549 | If External Representation of Material Number = ZAM_DQ_1 THEN Material type = FERT | Division =, Material Number contains ZAM | | Material type (MTART) | FERT | Accepted | 2019_10_20_2 |
| 1550 | If External Material Group = RAW_GROUP THEN Material type = FERT | Material Number contains ZAM, Division = | | Material type (MTART) | FERT | Initial | |
| 1551 | If External Representation of Material Number = ZAM_T1 THEN Material type = FERT | Material Number contains ZAM, Division = | | Material type (MTART) | FERT | Initial | |
| 1552 | If External Representation of Material Number = ZAM_TEST_ERROR THEN Material type = FERT | Division =, Material Number contains ZAM | | Material type (MTART) | FERT | Initial | |

312  316  318  314  332  320  322  324  326  328

FIG. 3

NEW_DATA_QUALITY RULE ⌐402

⌐404
Base Table: Basic Data (MARA)          ⌐412
                                        Status: New
Checked Field: Material type (MARA-MTART)

⌐408      ⌐420    ⌐422            ⌐424
General Information  Usage  Implementation  Dimensions      Rule Mining Implementation   ⌐428 Rules from Rule Mining      Administrative Data
⌐418                                                        426⌐                                                          ⌐430
Details   434⌐          ⌐416                                                             436⌐ Contacts

Description:                Scope:                                                              Rule Owner:
Reason:                     Link:                                                              Implementation Expert:

          438⌐                                                                                 Contact:
Usage                                                                                          Data Owner:

Usage    ⌐440                  Status  ⌐444        ⌐446
  ◯ Data Quality Evaluation    Not Ready         | Prepare |
  ⌐442
Implementation         ⌐450

Scope                                             Condition
  Expression:    Status:                            Expression:    Status:
                 Not Available                                      Not Available

                                                            452⌐ | Approve |  | Send for Implementation | ⌐454

400⌐

FIG. 4A

EP 3 786 810 B1

## NEW_DATA_QUALITY RULE

General Information    Usage          Implementation      Dimensions          Rule Mining Implementation          Rules from Rule Mining          Administrative Data

Usage          ⌐438
○ Data Quality Evaluation

Status
Disabled          | Enable | ⌐446

Implementation          ⌐450

Scope                                             Condition
  Expression:  ⌐460          Status:              Expression:  ⌐462          Status:
  NEW_DATA_QUALITY_RULE_SCP   Active              NEW_DATA_QUALITY_RULE_CON   Active

Dimensions          ⌐466

  Dimension          ⌐470          Category
                                   No line items available

Rule Mining Implementation

Scope                                    Scope                                    Rules from Rule Mining
  Decision Table:  ⌐472    Status:        Decision Table:  ⌐474      Status:       Total Rules from Rule Mining  2
  NEW_DATA_QUALITY_RULE_SDT  Active        NEW_DATA_QUALITY_RULE_CDT  Active        Implemented Rules from Rule Mining  2

          ⌐480
Rules from Rule Mining

| ID | Technical Description | Technical Focus Area | Status | Automatic Implementation | Linked By |
|---|---|---|---|---|---|
| ☐ 1546 | IF MARA-MATNR_EXTERNAL = ZAM_DQ2 THEN MARA-MTART = ABF | MARA-SPART = ,MARA-MATNR CP ZAM | Implemented | Supported | Dimirij |
| ☐ 1547 | IF MARA-MATNR_EXTERNAL = ZAM_PSS_PP THEN MARA-MTART = ROH | MARA-SPART = ,MARA-MATNR CP ZAM | Implemented | Supported | Dimirij |

484   486   482   488   490   492   494

Administrative Data          ⌐498

Created On:                    Created By:          Changed On:
09.10.2019, 14:26:44           Dimirij              09.12.2019, 15:12:32

EP 3 786 810 B1

FIG. 4B

Rule: NEW_DATA_QUALITY RULE —508

| Back | Display | Check | Save | Activate | Transport | Delete | More |

General ◣—512

Detail

| Context Overview | Start Simulation | —516

—520
If: NEW_DATA_QUALITY_RULE_SCP

Then

(1) Change value of MDQ_S_DR...DRF_RULE_UUID to 0894EF4591D11ED...   Change   524
(2) Change value of MDQ_BR...-RESULT_TYPE after processing NEW_DATA_QUALITY_RULE_CON ◢
(3) Change value of MDQ_BR...-RESULT_TYPE after processing SAP_MAP_BOOL_TO_RESULT
(4) Insert values into MDQ_T_BRFPLUS_RULE_RESULT from MDQ_S_BRFPLUS_RULE_RESUT

Else

(1) Change value of MDQ_S_DR...DRF_RULE_UUID to 0894EF4591D11ED...   Change   528
(2) Change value of MDQ_BR...-RESULT_TYPE to 0 Out of Scope ◢
(3) Insert values into MDQ_T_BRFPLUS_RULE_RESULT from MDQ_S_BRFPLUS_RULE_RESUT

FIG. 5

EP 3 786 810 B1

Boolean: NEW_DATA_QUALITY_RULE_CON ⟋608

Back | Display | Check | Save | Activate | Transport | Delete | More

General

Detail

Template | Invert Condition Result | Context Overview | Start Simulation

Boolean Logic Schema: <1>
⟋620

If  NEW_DATA-QUALITY-RULE_CDT  is equal to  MARA_DQ_STR_MTART  Change  Edit Operand
⟋612

Then BOOLEAN  is true, else is false
⟋624

FIG. 6

600

Decision Table: NEW_DATA_QUALITY_RULE_CDT ⟋710

Back | Display | Check | Save | Activate | Transport | Delete | More

General

Detail

Additional Actions | Context Overview | Start Simulation

Table Contents

| | | | 718 | 722 | |
| MATNR_EXTERNAL | SOURCE_ID | SPART | MTART |
| =ZAM_DQ2 | [*ZAM] | = " " | ABF (Waste) |
| -ZAM_PSS_PP 718 | [*ZAM] | = " " | ROH (Raw material) |

714

714

722

FIG. 7

700

800 ⌐

Receive a first plurality of individual data rules
804

Receive a selection of a second plurality of individual data rules of the first plurality of individual data rules to be associated with a collective data rule
808

Automatically generate at least one collective data rule artifact at least in part from at least a portion of antecedents, consequents, or a combination thereof, of individual data rules of the second plurality of individual data rules
812

FIG. 8

900

Receive a collective data rule comprising a plurality of individual data rules
904

Automatically generate a condition table having first plurality of rows, a row of the condition table corresponding to an individual data rule of the plurality of individual data rules and including consequent field values of the respective individual data rule
908

FIG. 9

1000

Receive a plurality of data rules
1004

Automatically execute one or more data definition language statements to generate a first table having rows corresponding to individual data rules and including rule antecedent field values for a respective individual data rule
1008

Automatically execute one or more data definition language statements to generate a second table, the second table having rows corresponding to an individual data rule and including rule antecedent field values and rule consequent values for a respective individual data rule
1012

Automatically generate a first condition expression configured to return a first value if a data item corresponds to a row of the first table corresponding to a data rule and a second value otherwise
1016

Automatically generate a second condition expression configured to return the first value if a data item corresponds to a row of the second table corresponding to a data rule and the second value otherwise
1020

FIG. 10

EP 3 786 810 B1

COMPUTING ENVIRONMENT 1100

1130

central processing unit 1110

graphics or co-processing unit 1115

MEMORY 1120

MEMORY 1125

COMMUNICATION CONNECTION(S) 1170

INPUT DEVICE(S) 1150

OUTPUT DEVICE(S) 1160

STORAGE 1140

SOFTWARE 1180 IMPLEMENTING DESCRIBED TECHNOLOGIES

FIG. 11

1200

CLOUD COMPUTING SERVICES

1210

| COMPUTING DEVICE 1220 | COMPUTING DEVICE 1222 | COMPUTING DEVICE 1224 |

FIG. 12

**EP 3 786 810 B1**

## REFERENCES CITED IN THE DESCRIPTION

**Patent documents cited in the description**

- US 9734229 B1